Europäisches Patentamt

European Patent Office

Office européen des brevets

(19)

(11) Veröffentlichungsnummer : **0 389 669 B1**

(12)

# EUROPÄISCHE PATENTSCHRIFT

(45) Veröffentlichungstag der Patentschrift :
**04.11.92 Patentblatt 92/45**

(51) Int. Cl.$^5$ : **G01D 5/16,** G01D 5/02,
G01B 7/30, H01C 10/16

(21) Anmeldenummer : **89111939.8**

(22) Anmeldetag : **30.06.89**

(54) **Lenkwinkelsensor.**

(30) Priorität : **31.03.89 DE 3910360**

(43) Veröffentlichungstag der Anmeldung :
**03.10.90 Patentblatt 90/40**

(45) Bekanntmachung des Hinweises auf die
Patenterteilung :
**04.11.92 Patentblatt 92/45**

(84) Benannte Vertragsstaaten :
**DE FR IT SE**

(56) Entgegenhaltungen :
**GB-A- 882 968**
**US-A- 2 625 632**
**PATENT ABSTRACTS OF JAPAN vol. 9, no.**
**220 (E-341)(1943) 06 September 1985, & JP-**
**A-60 78874 (MITSUBISHI DENKI K.K.) 04**
**Mai1985,**

(56) Entgegenhaltungen :
**IBM TECHNICAL DISCLOSURE BULLETIN.**
**vol. 8, no. 9, Februar 1966, New York, US,**
**Seiten 1186- 187; F.A. GOPLEN:**
**"ANGULARPOSITION INDICATOR"**
**PATENT ABSTRACTS OF JAPAN vol. 274, no.**
**8 (M-345) 14 Dezember 1984, & JP-A-59 144852**
**(MITSUBISHI DENKI K.K.) 20 August1984,**

(73) Patentinhaber : **VDO Adolf Schindling AG**
**Gräfstrasse 103**
**W-6000 Frankfurt/Main 90 (DE)**

(72) Erfinder : **Prinz, Günther**
**Loshäuserweg 16**
**W-3579 Wasenberg (DE)**
Erfinder : **Kreuz, Alois**
**Im Münsterfeld 9**
**W-6251 Selters 3 (DE)**

(74) Vertreter : **Klein, Thomas, Dipl.-Ing. (FH)**
**Sodener Strasse 9 Postfach 6140**
**W-6231 Schwalbach a. Ts. (DE)**

EP 0 389 669 B1

**Beschreibung**

Die Erfindung betrifft einen Lenkwinkelsensor mit einem ersten Potentiometer, dessen Schleifer in Abhängigkeit von der Drehbewegung einer Lenksäule direkt bewegbar ist, und einem zweiten Potentiometer, dessen Schleifer unter Zwischenschaltung eines Getriebes in einem vorgegebenen Untersetzungsverhältnis zur Drehbewegung der Lenksäule bewegbar ist.

Für den Einsatz verschiedener Fahrwerkselektroniken ist es erforderlich, die Lenkbewegung eines Fahrzeugs zu überwachen. Bei einer Vierradlenkung werden beispielsweise die Hinterräder bei geringen Fahrgeschwindigkeiten und großen Lenkausschlägen entgegengesetzt zu den Vorderrädern und bei hohen Fahrgeschwindigkeiten und kleinen Lenkausschlägen jedoch snychron zu den Vorderrädern gelenkt. Dadurch erreicht man beim Parkieren einen sehr geringen Wendekreis, bei einem Spurwechsel auf der Autobahn geringe Fliehkräfte. Ein anderes Beispiel für das Erfordernis der Überwachung der Lenkbewegung ist dir- elektronische Dämpferregelung. Wird mit einem Fahrzeug plötzlich bei höheren Fahrgeschwindigkeiten eine kurve gefahren, dann werden durch eine solche Regelung die Dämpfer vorübergehend härter eingestellt.

Üblicherweise verwendet man zur Überwachung des Lenkwinkels ein Potentiometer. Da das Lenkrad von Anschlag zu Anschlag jedoch mehr als eine Umdrehung ausführt, kann mit einem Potentiometer allein der Lenkwinkel nicht bestimmt werden. Es müßte zusätzlich die Zahl der Umdrehungen ermittelt und gespeichert werden, was aufwendig wäre. Würde man das Potentiometer über ein Getriebe derart antreiben, daß sein Schleifer maximal eine Umdrehung ausführt, dann wären kleine Winkelausschläge nicht mit ausreichender Genauigkeit bestimmbar.

Man hat deswegen schon Lenkwinkelsensoren mit zwei Potentiometern vorgeschlagen, wobei das eine direkt von der Lenksäule und das andere indirekt über ein Getriebe gedreht wird (vgl. EP-A-0 386 439 (Art. 54 (3,4) EPÜ)). Dabei ist ein feststehendes Gehäuse vorgesehen, daß ein mit der Lenksäule drehfest verbundenes Abgriffselement mit Flansch umschließt. Auf der einen Stirnseite des Flansches ist ein erstes Potentiometer angeordnet, dessen Schleifer auf einer gehäusefesten Leiterbahn gleitet und in einem Drehwinkel von ca. 360° ein Feinsignal erzeugt. Auf der anderen Stirnseite des Flansches ist eine spiralförmige Führungsnut ausgebildet, in der der Führungszapfen eines zweiten Potentiometers gleitet, das ein Grobsignal erzeugt. Durch rechnerische Verbindung des Grob- und Feinsignals kann die genaue Winkelstellung der Lenksäule bestimmt werden.

Bei diesem Lenkwinkelsensor wird als nachteilig angesehen, daß die Montage auf der Lenksäule verhältnismäßig schwierig ist. Man kann das Angriffselement einstückig ausführen und axial auf die Lenksäule aufschieben, was für die Erstmontage noch akzeptabel sein mag, bei der Nachrüstung oder bei Reparaturen aber zwangsläufig mit einem, erheblichen Arbeitsaufwand verbunden ist. Man kann das Abgriffselement und das Gehäuse aber auch längsgeteilt ausführen. Dann vereinfacht sich zwar die Montage, es entstehen zwangsläufig aber Stoßkanten in der Leiterbahn bzw. Führungsnut, die sich nach teilig auf die Erzeugung der Signale auswirken können, weil schon geringe Unstetigkeiten jedenfalls bei der elektronischer. Signalauswertung Fehler verursachen. Schließlich ist bei dem bekannten Lenkwinkelsensor nicht gewährleistet, daß die Bildung des Fein- und Grobsignals auch bei einer Drehrichtungsumkehr schlupffrei und stetig erfolgt, wie dies für eine elektronische Verarbeitung der Signale und eine hysteresefreie Wiedergabe des Lenkwinkels unbedingt erforderlich ist.

Der Erfindung liegt die Aufgabe zugrunde, einen Lenkwinkelsensor der eingangs genannten Art so weiterzubilden, daß er möglichst einfach aufgebaut ist, auch bei der Nachrüstung und Reparatur ohne großen Aufwand montiert werden kann und eine schlupffreie Übertragung der Bewegung der Lenksäule auf die beiden Potentiometer ermöglicht.

Diese Aufgabe wird dadurch gelöst, daß

a) der erste Schleifer mit einer ersten, feststehenden Schleiferbahn zusammenwirkt und drehfest mit einer ersten Welle verbunden ist, die in einem Gehäuse drehbar gelagert ist und über eine Kupplung direkt mit dem Ende der Lenksäule verbindbar ist.

b) der zweite Schleifer drehfest mit einer zweiten Welle verbunden ist, die im Gehäuse achsparallel zur ersten Welle drehbar gelagert ist, und daß

c) auf den Wellen Zahnscheiben befestigt sind, die entsprechend dem gewünschten Untersetzungsverhältnis unterschiedliche Zähnezapfen aufweisen und zusammen mit einem Zahnriemen ein schlupffreies Getriebe bilden.

Vorteilhafte Ausgestaltungen der Erfindung sind in den abhängigen Patentansprüchen 2 bis 5 beschrieben.

Mit dem erfindungsgemäßen Lenkwinkelsensor lassen sich alle genannten Forderungen erfüllen. Insbesondere ist eine spielfreie Bildung der Signale ohne Hysterese bei der Drehrichtungsumkehr gewährleistet. Er kann ohne großen Aufwand am Lenkgetriebe befestigt werden, wobei für eine spielfreie Ankopplung an das Ende der Lenksäule gesorgt ist.

Ein Abgleich des Lenkwinkelsensors kann schon bei der Herstellung des Sensors vorgenommen werden, ohne daß die vorgenommene Einstellung bis zum Einbau in ein Kraftfahrzeug wieder verlorengehen kann, wenn zur vorübergehenden Fixierung der Einstellung der Potentiometer ein eine Sollbruchstelle aufweisender Stift vorgesehen ist, welcher eine Potentiometerwelle mit einem gehäusefesten Teil des Lenkwinkelsensors verbindet, nach Montage des Lenkwinkelsensors bei einem Verdrehen der Lenksäule jedoch abschert. Ein solcher Stift hat gegenüber von Hand zu lösenden Transportsicherungen den Vorteil, daß durch ein Vergessen des Entfernens oder Lösens der Transportsicherung es nicht zu einem Blockieren der Lenkung kommen kann.

Die Erfindung läßt zahlreiche Ausführungsformen zu. Zur weiteren Verdeutlichung ihres Grundprinzips ist eine davon in der Zeichnung dargestellt und wird nachfolgend beschrieben. In ihr zeigen die

Fig. 1 einen Schnitt durch einen Lenkwinkelsensor nach der Erfindung,

Fig. 2 eine teilweise geschnittene Seitenansicht des Lenkwinkelsensors,

Fig. 3 eine Draufsicht auf den Lenkwinkelsensor,

Fig. 4 einen Schnitt durch einen Bereich der Kupplung des Lenkwinkelsensors entlang der Linie IV - IV in Figur 4,

Fig. 5 einen Blick auf die Stirnseite der dem Lenkwinkelsensor zugewandten Lenksäule.

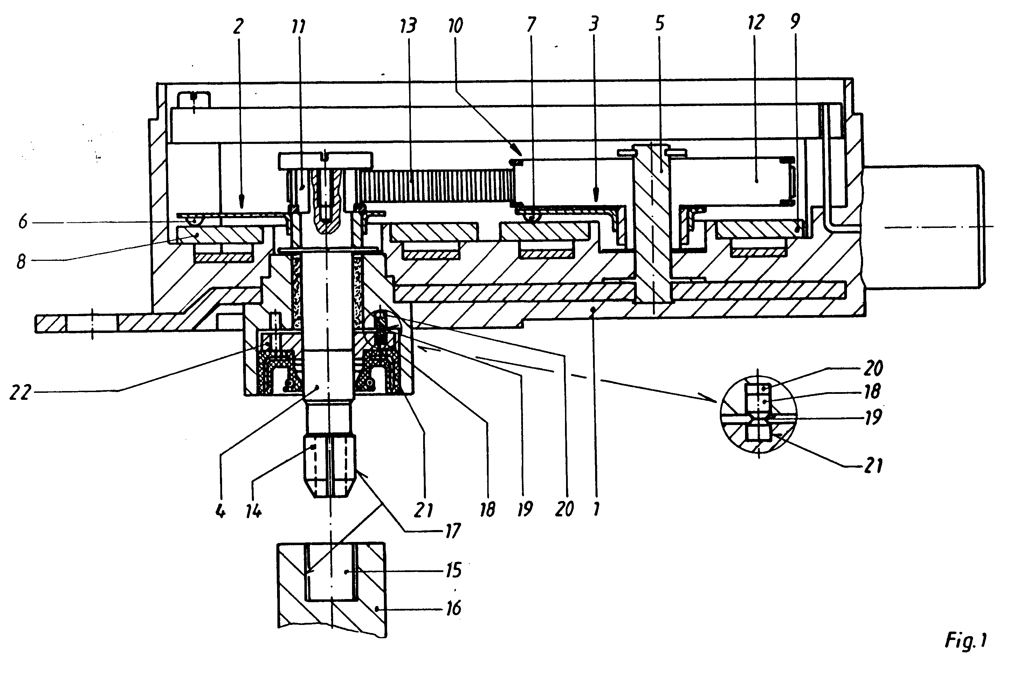

Die Figur 1 zeigt ein Gehäuse 1, in welchem zwei Potentiometer 2, 3 angeordnet sind. Jedes Potentiometer 2, 3 besteht aus einer Schleiferwelle 4, 5, einem Schleifer 6, 7 und jeweils einer Schleiferbahn 8, 9.

Die Schleiferwelle 4 ist mit der Schleiferwelle 5 durch ein formschlüssiges, spielfreies Getriebe 10 verbunden, welches aus zwei Zahnscheiben 11, 12 und einem Zahnriemen 13 besteht. Die auf der Schleiferwelle 4 befestigte Zahnscheibe 11 hat einen geringeren Durchmesser als die auf der Schleiferwelle 5 angeordnete Zahnscheibe 12.

Die Schleiferwelle 4 hat auf ihrer der Zahnscheibe 11 abgewandten Seite ein Steckteil 14, welche in eine Steckeraufnahme 15 in der Stirnseite einer Lenksäule 16 einsteckbar ist. Das Steckteil 14 bildet zusammen mit der Steckeraufnahme 15 eine Kupplung 17. Es ist in Längsrichtung geschlitzt ausgeführt und dadurch radial zusammendrückbar. Sie kann deshalb gegenüber der Steckeraufnahme 15 im Durchmesser ein geringes Übermaß aufweisen, so daß Spiel ausgeschlossen werden kann.

Die Figur 1 läßt weiterhin einen Stift 18 erkennen, der eine Sollbruchstelle 19 aufweist. Der Stift 18 ist in eine Bohrung 20 des Gehäuses 1 eingesetzt und ragt in eine Bohrung 21 eines Ringes 22, der sich bei Drehung der Schleiferwelle 4 stets mit dieser dreht. Durch diese Gestaltung kann die Schleiferwelle 4 nur verdreht werden, wenn dabei so hohe Kräfte aufgebracht werden, daß es zu einem Abscheren des Stiftes 18 kommt.

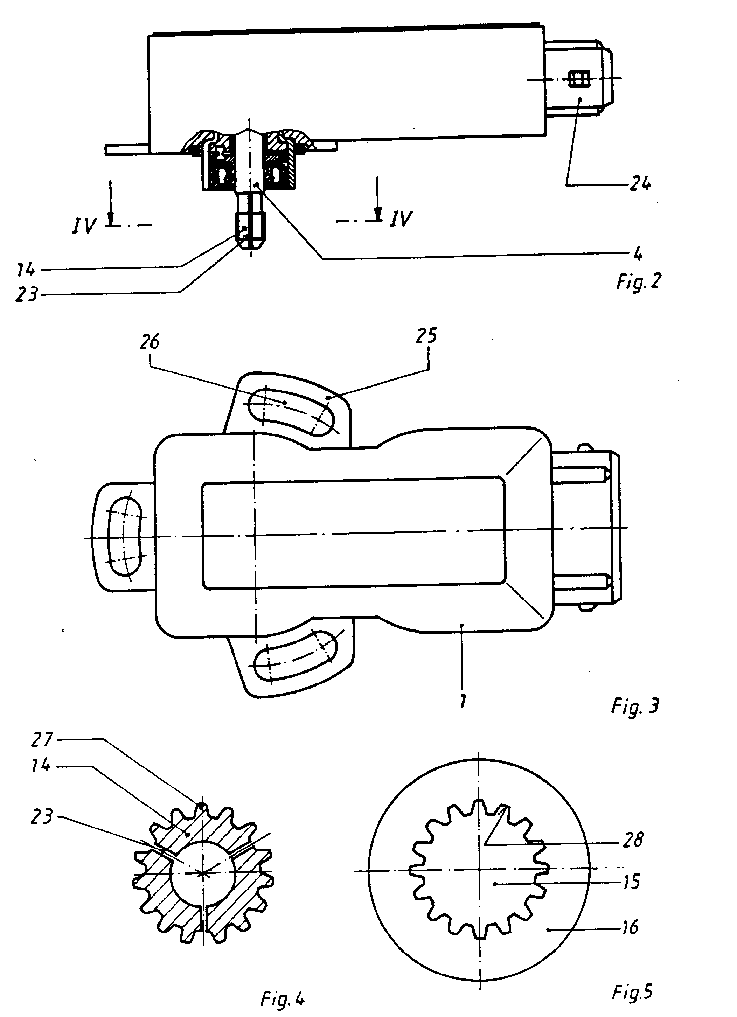

Die Figur 2 zeigt den Lenkwinkelsensor von der Seite. Zu sehen ist das untere Ende der Schleiferwelle 4 mit dem Steckteil 14, welches einen Längsschlitz 23 hat, so daß es in radialer Richtung zusammengedrückt werden kann und spielfrei in der in Figur 1 gezeigten Steckeraufnahme 15 zu sitzen vermag. Die Figur 1 zeigt weiterhin einen elektrischen Anschluß 24, an den die elektrischen Leitungen des Lenkwinkelsensors anzuschließen sind.

In Figur 3 ist zu sehen, daß das Gehäuse 1 drei Anschlußlaschen 25 mit jeweils einem Langloch 26 hat. Diese Anschlußlaschen 25 dienen dazu, den Lenkwinkelsensor am Lenkgetriebe festschrauben zu können.

Die Schnittdarstellung gemäß Figur 4 zeigt, daß das Steckteil 14 insgesamt drei Längsschlitze 23 hat. Weiterhin ist in Figur 4 eine in Längsrichtung verlaufende Kerbverzahnung 27 dargestellt. Wenn das Steckteil 14 in die Steckeraufnahme 15 gesteckt wird, dann greift die Kerbverzahnung 27 in Nuten 28 der Steckaufnahme 15.

**Patentansprüche**

1. Lenkwinkelsensor mit einem ersten Potentiometer (2), dessen Schleifer (6) in Abhängigkeit von der Drehbewegung einer Lenksäule (16) direkt bewegbar ist, und einem zweiten Potentiometer (3), dessen Schleifer (7) unter Zwischenschaltung eines Getriebes (10) in einem vorgegebenen Untersetzungsverhältnis zur Drehbewegung der Lenksäule (16) bewegbar ist, so ausgebildet, daß

a) der erste Schleifer (6) mit einer ersten, feststehenden Schleiferbahn (8) zusammenwirkt und drehfest mit einer ersten Welle (4) verbunden ist, die in einem Gehäuse (1) drehbar gelagert ist und über eine Kupplung (17) direkt mit dem Ende der Lenksäule (16) verbindbar ist,

b) der zweite Schleifer (7) drehfest mit einer zweiten Welle (5) verbunden ist, die im Gehäuse (1) achsparallel zur ersten Welle (4) drehbar gelagert ist und daß

c) auf den Wellen (4, 5) Zahnscheiben (11, 12) befestigt sind, die entsprechend dem gewünschten Untersetzungsverhältnis unterschiedliche Zähnezahlen aufweisen und zusammen mit einem Zahnriemen (13) ein schlupffreies Getriebe (10) bilden.

2. Lenkwinkelsensor nach Anspruch 1, jedoch mit der Maßgabe, daß das schlupffreie Getriebe (10) aus zwei ineinander kämmenden Zahnrädern besteht, bei denen durch eine Federeinrichtung die Wirkrichtung des Flankenspiels festgelegt ist.

3. Lenkwinkelsensor nach Anspruch 1, jedoch mit der Maßgabe, daß das schlupffreie Getriebe (10) aus zwei Zahnrädern aus einem nichtelastischen Werkstoff und einem Zwischenzahnrad aus einem elastischen Werkstoff besteht, welches unter Spannung in beiden Zahnrädern kämmt.

4. Lenkwinkelsensor nach einem der Ansprüche 1 bis 3, dadurch gekennzeichnet, daß die Kupplung (17) durch ein radial federndes, eine in Längsrichtung verlaufende Kerbverzahnung (27) aufweisendes, in Längsrichtung geschlitztes Steckteil (14) auf der ersten Welle (4) und eine in Längsrichtung verlaufende Nuten (28) aufweisende Steckeraufnahme (15) in der Stirnfläche der Lenkersäule (16) oder eines entsprechenden Bauteils gebildet ist, wobei der Außendurchmesser des Steckerteils (14) im entspannten Zustand größer ist als der Innendurchmesser der Steckeraufnahme (15).

5. Lenkwinkelsensor nach einem der Ansprüche 1 bis 4, dadurch gekennzeichnet, daß zur vorübergehenden Fixierung der Einstellung der Potentiometer (2, 3) ein eine Sollbruchstelle (19) aufweisender Stift (18) vorgesehen ist, welcher eine der Wellen (4, 5) mit dem Gehäuse (1) drehfest verbindet, nach der Montage des Lenkwinkelsensors bei einem Verdrehen der Lenksäule (16) jedoch abschert.

**Claims**

1. A steering angle sensor with a first potentiometer (2), the sliding contact (6) of which is directly movable depending on the rotational movement of a steering column (16), and a second potentiometer (3), the sliding contact (7) of which is movable in series with a gear train (10) at a predetermined reduction ratio to the rotational movement of the steering column (16), designed so that
    a) the first sliding contact (6) interacts with a first, fixed sliding contact path (8) and is attached rotationally fixed to a first shaft (4), which is rotatably mounted in a housing (1) and can be attached directly to the end of the steering column (16) via a coupling (17);
    b) the second sliding contact (7) is attached rotationally fixed to a second shaft (5), which is rotatably mounted in the housing (1), parallel to the axis of the first shaft (4); and that
    c) toothed discs (11, 12) are mounted on the shafts (4, 5), which toothed discs have different numbers of teeth corresponding to the desired reduction ratio and which together with a toothed belt (13) form a slip-free gear train (10).

2. A steering angle sensor according to Claim 1, but with the stipulation that the slip-free gear train (10) comprises two toothed wheels which mesh with each other, for which the direction of action of the backlash is fixed by a spring device.

3. A steering angle sensor according to Claim 1, but with the stipulation that the slip-free gear train (10) comprises two toothed wheels made of an inelastic material and an intermediate toothed wheel made of an elastic material, which meshes with both toothed wheels under stress.

4. A steering angle sensor according to any one of Claims 1 to 3, characterised in that the coupling (17) is formed by a connector part (14) on the first shaft (4), which connector part is radially sprung, has an indented toothed section (27) running in the longitudinal direction, and is slotted in the longitudinal direction, and a connector housing (15) in the end face of the steering column (16) or of a corresponding component, which connector housing has grooves (28) running in the longitudinal direction, wherein the outside diameter of the connector part (14) in the unstressed state is larger than the inside diameter of the connector housing (15).

5. A steering angle sensor according to any one of Claims 1 to 4, characterised in that a pin (18) having a predetermined breaking point (19) is provided for the temporary fixing of the setting of the potentiometers (2, 3), which pin attaches one of the shafts (4, 5) rotationally fixed to the housing (1), but which shears off on twisting the steering column (16) after mounting the steering angle sensor.

**Revendications**

1. Capteur d'angle de braquage comportant un premier potentiomètre (2) dont le frotteur (6) peut être directement déplacé en fonction du déplacement rotatif d'une colonne de direction (16), et un deuxième potentiomètre (3) dont le frotteur (7) peut être déplacé avec interposition d'un dispositif d'engrènement (10) selon un rapport de démultiplication imposé à l'avance, par rapport au déplacement rotatif de la colonne de direction, capteur conformé de façon telle, que,
    a) le premier frotteur (6) coopère avec une première piste conductrice (8) fixe et est installé, de façon à en être solidaire en rotation, sur un premier arbre (4) qui est monté de façon rotative dans un corps (1) et qui peut être relié par l'intermédiaire d'un accouplement (17) directement à l'extrémité de la colonne de direction (16),
    b) que le deuxième frotteur (7) est fixé, de manière à en être solidaire en rotation, sur un deuxième arbre (5) qui est monté, de façon rotative sur le corps (1) son axe étant parallèle à celui du premier arbre (4), et

c) que sur les arbres (4, 5) sont fixées des poulies (11, 12) qui présentent des nombres de dents différents en fonction du rapport de démultiplication souhaite et qui forment, avec une courroie crantée (13), un dispositif d'engrènement (10) sans à coups ni glissement.

2. Capteur d'angle de braquage selon la revendication 1, présentant cependant la particularité consistant en ce que le dispositif d'engrènement (10) sans à-coups est constitué par deux roues dentées engrenées l'une dans l'autre et dans lesquelles le sens d'application du jeu des flancs est déterminé au moyen d'un dispositif à ressort.

3. Capteur d'angle de braquage selon la revendication 1, présentant cependant la particularité consistant en ce que le dispositif d'engrènement (10) sans à-coups est constitué par deux roues dentées réalisées en un matériau non élastique, et par une roue dentée intermédiaire réalisée en un matériau élastique qui engrène sous tension mécanique dans les deux roues dentées.

4. Capteur d'angle de braquage selon l'une des revendications 1 à 3, caractérisé en ce que l'accouplement (17) est constitué par une cannelure (27) qui s'étend dans le sens longitudinal, par une goupille (14) fendue dans le sens longitudinal, située sur le premier arbre (4), et par un logement (15) pour goupille, présentant des gorges (28) qui s'étendent dans le sens longitudinal et situé dans la surface frontale de la colonne de direction (16) ou d'une pièce de structure correspondante, le diamètre extérieur de la goupille (14) étant, à l'état détendu, supérieur au diamètre intérieur du logement (15) pour goupille.

5. Capteur d'angle de braquage selon l'une des revendications 1 à 4, caractérisé en ce qu'en vue de main tenir fixe de façon passagère le réglage des potentiomètres (2, 3), on prévoit une tige (18) présentant un emplacement (19) de rupture volontaire, qui relie un des arbres (4, 5) au corps (1) de façon à en empêcher la rotation, mais qui est cisaillée après le montage du capteur d'angle de braquage lors d'une rotation de la colonne de direction (16).

Fig. 1

EP 0 389 669 B1

Fig. 2

IV

IV

24

14

23

4

26

25

1

Fig. 3

27

14

23

Fig. 4

28

15

16

Fig.5